# EUROPÄISCHE PATENTANMELDUNG

(11) **EP 3 722 065 A1**
(43) Veröffentlichungstag der Anmeldung: **14.10.2020**
(21) Anmeldenummer: 19168421.6
(22) Anmeldetag: 10.04.2019
(51) Int. Cl.: B29C 45/14, B29C 45/16

(54) **KRAFTFAHRZEUGZIERTEIL UND VERFAHREN ZU DESSEN HERSTELLUNG**

(71) Anmelder: DURA Automotive Holdings U.K., Ltd., Birmingham, West Midlands B35 7AG (GB)
(72) Erfinder: Schulze zur Wiesche, Jochen, 51143 Köln (DE); Stegemann, Jan, 58809 Neuenrade (DE)
(74) Vertreter: btb IP Bungartz Baltzer Partnerschaft mbB Patentanwälte

(57) **Zusammenfassung**

Um bei einem im Mehrkomponenten-Spritzgussverfahren hergestellten Kraftfahrzeugzierteil Bedien- oder Anzeigebereiche in einer dem Nutzer zugewandten Dekorfläche bei gleichzeitig hoher Kraftfestigkeit und Betriebssicherheit zu realisieren, ist vorgesehen, dass eine gemeinsam von einem Trägerteil und einem Funktionsteil gebildete Vorderseite zur Ausbildung einer durchgängigen Dekorfläche mit einem dritten Kunststoffmaterial versehen wird.

## Beschreibung

Die Erfindung betrifft ein in einem Mehrkomponenten-Spritzgussverfahren hergestelltes Kraftfahrzeugzierteil mit einer bei bestimmungsgemäßer Verwendung dem Fahrzeugnutzer zugewandten Dekorfläche und ein Verfahren zu dessen Herstellung. Das Kraftfahrzeugzierteil ist dafür eingerichtet und so gestaltet, dass rückseitig im Bereich eines von einem Funktionsteil gebildeten Funktionsabschnitts ein elektronisches Funktionselement angeordnet wird, mittels dem vorderseitig über die Dekorfläche betätigbare und sich in der Dekorfläche optisch erzeugte Bedienflächen und/oder Anzeigeflächen geschaffen werden.

Zierteile für Kraftfahrzeuge, die in einem Mehrkomponenten-Spritzgussverfahren hergestellt werden und rückseitig ein Trägerteil aus einem ersten Kunststoffmaterial und vorderseitig zur Erzeugung einer Dekorfläche eine Deckschicht aus einem zweiten Kunststoffmaterial aufweisen, und die rückseitig oder in das spritzgegossene Material eingebettete elektronische Funktionselemente tragen, sind dem Fachmann bekannt.

In der WO 2010/115585 A1 ist eine in einem Mehrkomponenten-Spritzgussverfahren hergestellte Kraftfahrzeugblende beschrieben, bei der ein Trägerteil aus einem ersten Kunststoffmaterial hergestellt wird und dieses dann mit einem zweiten Kunststoffmaterial zur Erzeugung einer Dekorfläche vollflächig mit einer Deckschicht überspritzt wird. Das zweite Kunststoffmaterial ist transparent oder semi-transparent ausgebildet und überdeckt vorderseitig eine im Trägerteil beim Spritzgießen ausgebildete Aussparung, in die rückseitig ein elektronisches Funktionselement oder diesem zugeordnete Funktionsbauteile eingesetzt werden. Nachteilig an dieser Ausgestaltung ist insbesondere, dass die Materialien, die sich bei einer derartigen Konstruktion als zweites Kunststoffmaterial eignen, nur eine begrenzte Kratzfestigkeit aufweisen, was dauerhaft dem Qualitätseindruck mindern sowie die Funktionssicherheit der rückseitig angeordneten elektronischen Funktionselemente beeinträchtigen kann. Unter Berücksichtigung der verwendeten Kunststoffmaterialen ist ferner zur Sicherstellung einer ausreichenden strukturellen Steifigkeit des Gesamtbauteils und der Deckschicht selbst und aufgrund der hohen Verarbeitungsviskosität der eingesetzten Kunststoffmaterialien eine Dicke der Deckschicht von etwa 2,5 mm erforderlich, was die Kraftfahrzeugblende insgesamt relativ dick macht und einen vergleichsweise hohen Materialaufwand mit sich bringt.

Aus der DE 10 2012 211 951 A1 ist dem Fachmann bekannt, die Dekorfläche eines Zierteils durch Fluten der Außenseite eines Trägerteils mit einer Deckschicht aus besonders kratzfestem Polyurethan oder Polyurea zu erzeugen. Ein solches Material weist zum Zeitpunkt der Einspritzung aufgrund der niedrigen Viskosität besonders günstige Fließeigenschaften aufweist, die eine Deckschicht mit einer Dicke von wenigen hundert Mikrometern ermöglichen. Nachteilig an dieser Ausgestaltung ist jedoch, dass eine derart dünne Deckschicht keine ausreichende strukturelle Steifigkeit zu erzeugen vermag, um im Trägerteil belassene Aussparungen zu überdecken.

Aufgabe der Erfindung ist es, ein gegenüber dem Stand der Technik verbessertes Kraftfahrzeugzierteil und ein verbessertes Verfahren zur Herstellung eines Kraftfahrzeugzierteils zu schaffen. Das Kraftfahrzeugzierteil soll eine dem Fahrzeugnutzer zugewandte Dekorfläche, in der Anzeigen- und/oder Bedienflächen realisiert sind, mit erhöhter Kraftfestigkeit aufweisen und gegenüber herkömmlichen Kraftfahrzeugzierteilen dennoch einen schmaleren Aufbau ermöglichen.

Die Aufgabe wird durch ein Kraftfahrzeugzierteil nach Anspruch 1 und den in Patentansprüchen 12 und 14 definierten Verfahren zur Herstellung eines Kraftfahrzeugzierteils gelöst.

Das Kraftfahrzeugzierteil weist eine von einer Deckschicht gebildete Dekorfläche auf und umfasset ein aus einem ersten Kunststoffmaterial im Spritzgussverfahren erzeugtes Trägerteil mit einer Vorderseite und einer Rückseite, ein aus einem zweiten Kunststoffmaterial erzeugtes Funktionsteil mit einer Vorderseite und einer Rückseite. Dabei ist das Funktionsteil zumindest teilweise vom ersten Kunststoffmaterial umspritzt oder das zweite Kunststoffmaterial ist zumindest teilweise in eine im ersten Kunststoffmaterial belassene Aussparung eingespritzt, und die Vorderseiten von Trägerteil und Funktionsteil sind zur Ausbildung einer durchgängigen Dekorfläche mit einem die Deckschicht bildenden dritten Kunststoffmaterial versehen. Das die Deckschicht bildende dritte Kunststoffmaterial ist bevorzugt in einem IMC (In-Mold-Coating) Verfahren durch Fluten der Vorderseiten von Trägerteil und Funktionsteil mit dem dritten Kunststoffmaterial auf diese aufgebracht. Es ist aber auch denkbar, dass die Deckschicht durch einen separaten, dem Spritzgussprozess von Trägerteil und Funktionsteil nachgelagerten Prozessschritt außerhalb des Spritzgusswerkzeugs aufgebracht wird, z.B. durch einen nachträglichen Beschichtungs- bzw. Lackierprozess, etwa durch ein Spray- oder Tauchverfahren. Hierdurch können auch Materialien Verwendung finden, die für eine Verarbeitung in einem IMC Prozess ungeeignet sind.

Bei einem Verfahren zur Herstellung eines Kraftfahrzeugzierteils ist vorgesehen, dass ein erstes Kunststoffmaterial zur Schaffung eines Trägerteils mit einer Vorderseite und einer Rückseite unter Ausbildung einer im Trägerteil verbleibenden Aussparung in eine Spritzgussform eingespritzt wird und ein zweites Kunststoffmaterial zur Schaffung eines Funktionsteils mit einer Vorderseite und einer Rückseite zumindest teilweise in die Aussparung hinein eingespritzt wird.

Alternativ hierzu kann auch vorgesehen sein, dass zunächst ein eine Vorderseite und eine Rückseite aufweisendes Funktionsteils aus einem zweiten Kunststoffmaterial in eine Spritzgussform eingelegt oder eingespritzt wird und dann zur Schaffung eines Trägerteils mit einer Vorderseite und einer Rückseite ein erstes Kunststoffmaterial unter zumindest teilweisem Umspritzen des Funktionsteils eingespritzt wird.

In beiden Fällen werden anschließend die Vorderseiten des Trägerteils und des Funktionsteils - je nach angewendetem Verfahren vor oder nach der Entformung aus dem Spritzgusswerkzeug - mit einem dritten Kunststoffmaterial zur Schaffung der die Vorderseiten von Trägerteil und Funktionsteil überdeckenden durchgängigen Deck-schicht versehen.

Der Erfindung liegt unter anderem die Überlegung zugrunde, dass die strukturelle Steifigkeit des Bauteils bei gleichzeitiger Schaffung der Möglichkeit, außenseitig Bedien- oder Anzeigebereiche zu realisieren, nicht mehr maßgeblich von dem die Dekorfläche bildenden Kunststoffmaterial unterstützt werden muss, wenn gewährleistet ist, dass die unter diesem dritten Kunststoffmaterial liegende Struktur in sich bereits eine ausreichende strukturelle Steifigkeit und Funktionalität aufweist.

Die unter der die Dekorfläche bildenden Materialschicht (Deckschicht) liegende Struktur kann dadurch, dass bereits diese mehrkomponentig unter Verwendung von unterschiedlichen Kunststoffmaterialien hergestellt wird, die von Mehrkomponentenzierteilen gekannte vorteilhafte Hybridstruktur aufweisen, die durch die Verwendung von zwei unterschiedlichen Kunststoffmaterialien ermöglicht ist. Das Trägerteil kann nach wie vor von einem schlagzähen sowie duktilen und somit für die Befestigung des Zierteils am Fahrzeug vorteilhaften ersten Kunststoffmaterial gebildet sein, das nicht (semi)transparent bzw. transluzent oder auf die erforderliche Weise transmissiv sein muss. Nur in einem begrenzten Teilbereich eines Funktionsabschnitts, in dem die vorderseitigen Anzeige- und/oder Bedienflächen realisiert werden sollen, kommt zur Bildung eines Funktionsteils ein zweites Kunststoffmaterial zum Einsatz, dass dann (semi-)transparent bzw. transluzent bzw. auf die erforderliche Weise transmissiv sein kann. Das die Deckschicht und damit die Dekorfläche bildende dritte Kunststoffmaterial kann über die Vorderseiten von Trägerteil und Funktionsteil, die gemeinsam eine mit dem dritten Kunststoffmaterial durchgängig zu bedeckende Vorderseite des noch nicht mit der Deckschicht versehenen Zwischenbauteils bilden, geflutet oder auf sonstige Weise aufgebracht werden.

Erstes Kunststoffmaterial, zweites Kunststoffmaterial und drittes Kunststoffmaterial sind bevorzugt sich voneinander unterscheidende Kunststoffmaterialien.

Als erstes Kunststoffmaterial kommt bevorzugt ein schlagzäher, duktiler Kunststoff zum Einsatz, insbesondere ein Acrylnitril-Butadien-Styrol-Copolymer (ABS), ein Acrylnitril-Styrol-Acrylat-Copolymer (ASA) oder ein Polyblend mit Polycarbonat als Bestandteil, zum Beispiel ein PC-ABS Polyblend. Das erste Kunststoffmaterial kann dabei ein lichtundurchlässiger, opaker Kunststoff sein.

Als zweites Kunststoffmaterial kann insbesondere ein für elektromagnetische Wellen, insbesondere für Licht, transmissiver Kunststoff verwendet werden. Dieser kann, sofern eine Lichtdurchlässigkeit gewünscht ist, klartransparent (blick- bzw. bilddurchlässig) oder aber semitransparent oder aber transluzent (lichtdurchlässig, nicht aber blick- bzw. bilddurchlässig) sein. Geeignete Kunststoffmaterialien sind insbesondere Styrol-Acrylnitril-Copolymere (SAN), Polymethylmethacrylat (PMMA) oder Polycarbonat (PC).

Das dritte Kunststoffmaterial, das die äußere Deckschicht bildet, ist bevorzugt ein reaktiver Kunststofflack, etwa ein Lack auf Polyurethan- oder Polyurea-Basis, oder ein sonstiger geeigneter bevorzugt hochkratzfester Hartlack. Auch das dritte Kunststoffmaterial kann, sofern eine Lichtdurchlässigkeit gewünscht ist, klartransparent (blick- bzw. bilddurchlässig) oder aber semitransparent oder aber transluzent (lichtdurchlässig, nicht aber blick- bzw. bilddurchlässig) sein.

Bevorzugt sind das zweite Kunststoffmaterial und das dritte Kunststoffmaterial transluzent. Dabei wird die Transluzenz des zweiten und des dritten Kunststoffmaterials und die Farbe des ersten Kunststoffmaterials so aufeinander abgestimmt, dass die Dekorfläche im Bereich der vom dritten Kunststoffmaterial überdeckten Vorderseite des Funktionsteils (im Funktionsabschnitt) zwar transluzent, gleichwohl aber durchgängig optisch blickdicht ist. Dies bedeutet, dass die von erstem und zweiten Kunststoffmaterial gebildeten Schichten das Durchscheinen von Zeichen (Buchstaben, Zahlen, sonstige Zeichen) ermöglicht, die durch rückseitig hinter dem Funktionsteil angeordneten und eingeschalteten Leuchtelementen zur Schaffung einer vorderseitig auf der Dekorfläche wahrnehmbaren und sich in der Dekorfläche abbildenden Leuchtanzeige erzeugt werden. Gleichzeitig bedeutet "durchgängig optisch blickdicht", dass die Dekorfläche vorderseitig dem Fahrzeugnutzer optisch wie eine einzige, undurchsichtige Fläche erscheint. Hinter dem die Dekorfläche bildenden dritten Kunststoffmaterial liegende Strukturen, einschließlich des Übergangs von Trägerteilvorderseite zu Funktionsteilvorderseite, sind bei normalem Lichteinfall nicht erkennbar. Bevorzugt ist das erste Kunststoffmaterial dunkelgrau oder schwarz. Das jeweils transluzente zweite und/oder dritte Kunststoffmaterial ist bevorzugt rauchgrau transluzent. Die durchgängig optisch blickdichte Dekorfläche wirkt hierdurch schwarz glänzend.

Das Herstellungsverfahren stellt sich bevorzugt als eine Kombination von 2K-Thermoplastspritzguss, RIM (Reaction-Injection-Molding) und IMC (In-Mold-Coating) dar, sofern nicht nachträglich und außerhalb des Spritzgusswerkzeugs Beschichtungs- bzw. Lackierprozesse zum Einsatz kommen. Konventionelle 2-Komponenten Zierteile, die zusätzlich mit elektronischen Funktionsbauteilen ausgestattet sind, können auf diese Weise zur Erzeugung einer besonders kratzunempfindlichen A-Class Dekorfläche mit einer geeigneten Hardcoat-Beschichtung, zum Beispiel aus Polyurea, Polyurethan oder einem sonstigen Hardcoat-Lack, versehen werden.

Das Kraftfahrzeugzierteil kann sowohl als Außenzierteil oder als Innenzierteil ausgebildet sein. Beispiele für denkbare Außenzierteile sind A-, B-, C- oder D-Säulenblenden, Heckspoiler, Luftleitblenden, Windschutz- bzw. Heckscheibenrahmen, Dachrinnenabdeckungen, Heckklappenabdeckungen. Beispiele für mögliche Innenzierteile sind Mittelkonsolenabdeckungen, Armaturenbretter, Bedientafeln für Fensterheber, Klimaanlagen oder Ähnliches, Einsätze in Türverkleidungen, Rahmen für Infotainmenteinsätze, Navigationsgeräte oder sonstige Bildschirme.

Durch das teilweise Umspritzen eines in das Spritzgussteil eingesetzten Funktionsteils mit dem ersten Kunststoffmaterial oder das Einspritzen des zweiten Kunststoffmaterials in einem beim Spritzgießen des Trägerteils erzeugte Aussparung lässt sich Funktionsteil auf eine Art teilweise in das Trägerteil einbetten, die gewährleistet, dass die Rückseite des Funktionsteils zugänglich gehalten ist, also insbesondere nicht durch das erste Kunststoffmaterial rückseitig bedeckt ist. Dies ermöglicht die Anbringung von herkömmlichen elektronischen Funktionselementen auf der Rückseite des Zierteils mit herkömmlichen Maßnahmen (Clips- bzw. Rastverbindungen, sonstigen mechanischen Befestigungsmitteln wie Schrauben, Klebungen, etc.). Das elektronische Funktionselement muss demnach nicht besonders dünn, etwa als Folie, ausgebildet sein und auch nicht notwendigerweise bereits im Spritzgussprozess teilweise oder vollständig in das erste Kunststoffmaterial eingebettet und von diesem gestützt sein.

Es kann vorgesehen sein, dass die Rückseite des Funktionsteils und die Rückseite des Trägerteils stufenlos bündig ineinander übergehen. Etwaige Funktionsstrukturen wie Befestigungsstrukturen, über die ein elektronisches Funktionselement rückseitig am Zierteil angebracht werden kann (Gewindelöcher, Klipse, Rasthaken), Dichtungsaufnahmen, Positionierungshilfen, Aufsetzrahmen, Aufnahmerahmen für durchleuchtbare Anzeigefolien oder ähnliches, sind dann zumindest auch, bevorzugt ausschließlich, rückseitig am Trägerteil mittels des ersten Kunststoffmaterials ausgebildet. Es kann aber auch vorgesehen sein, dass das Funktionsteil rückseitig derartige Funktionsstrukturen ausbildet, die gegenüber der Rückseite des Trägerteils hervorsteht. In diesem Fall können die Funktionsstrukturen zumindest auch oder sogar ausschließlich vom zweiten Kunststoffmaterial gebildet sein.

Eine vorteilhafte Ausgestaltung sieht vor, dass das Funktionsteil und das Trägerteil gemeinsam eine vom dritten Kunststoffmaterial durchgängig bedeckte, bevorzugt geflutete, und somit unter der Deckschicht liegende Vorderseite bilden. Dabei kann insbesondere vorgesehen sein, dass die Vorderseite des Funktionsteils und die Vorderseite des Trägerteils stufenlos bündig und/oder spaltlos und/oder kantenfrei ineinander übergehen. Dies gewährleistet unter anderem, dass das die Dekorfläche bildende dritte Kunststoffmaterial die von Funktionsteil und Trägerteil gemeinsam gebildete Vorderseite bedecken, insbesondere fluten, kann, ohne dass sich Stufen, Spalte oder Kanten und hierdurch bedingte bereichsweise unterschiedliche Materialstärken des dritten Kunststoffmaterials in der Dekorfläche wahrnehmbar abbilden. Dies schließt selbstverständlich nicht aus, dass das dritte Kunststoffmaterial Unebenheiten in der gemeinsamen Vorderseite von Trägerteil und Funktionsteil in gewissen Grenzen auch ausgleichen soll. Derartige Unebenheiten sollen aber geringgehalten werden.

Weiter kann vorgesehen sein, dass das die äußerlich wahrnehmbare Dekorfläche bildende dritte Kunststoffmaterial zumindest in dem Bereich, in dem es die Vorderseite des Funktionsteils bedeckt, bevorzugt jedoch über die gesamte gemeinsam von Funktionsteil und Trägerteil gebildete Bauteilvorderseite des Zierteils, eine EMW-transmissive Materialstärke aufweist, insbesondere eine lichtdurchlässige Materialstärke aufweist. Bei ausreichend dünner Materialstärke kann auch vorgesehen sein, dass kein in sich transluzentes drittes Kunststoffmaterial verwendet wird, sondern dass sich die Transluzenz der Deckschicht aus der geringen Materialstärke ergibt. Auch eine ausreichend geringe Dicke gewährleistet eine hinreichende Transmissivität für elektromagnetische Wellen (EMW), also insbesondere eine hinreichende Transluzenz für Licht, um eine äußerlich gut wahrnehmbare Anzeige auf der Dekorfläche zu erzeugen, ohne dass die Deckschicht dabei selbst wahrnehmbar transparent wirkt und etwaige darunter liegende Unebenheiten oder Strukturen durchscheinen.

Zur Schaffung der äußeren Dekorfläche wird das dritte Kunststoffmaterial bevorzugt mit einer Dicke zwischen 300 µm und 500 µm auf die Vorderseiten von Trägerteil und Funktionsteil aufgebracht, insbesondere geflutet. Die Dicke des dritten Kunststoffmaterial kann allerdings auch geringer sein, also insbesondere kleiner 300 µm oder sogar kleiner 100 µm oder kleiner 50 µm.

Eine weitere vorteilhafte Ausgestaltung sieht vor, dass die Durchdringungsfläche, mit der das das Funktionsteil bildende zweite Kunststoffmaterial das das Trägerteil bildende erste Kunststoffmaterial auf der Vorderseite durchdringt, geringer ist als die Durchdringungsfläche, mit der das zweite Kunststoffmaterial das erste Kunststoffmaterial auf der Rückseite durchdringt. Insbesondere kann vorgesehen sein, dass das Funktionsteil im Bereich des Übergangs von der rückseitigen Durchdringungsfläche zur vorderseitigen Durchdringungsfläche eine Fase, eine Abschrägung oder eine Stufe ausbildet. Dies verringert unter anderem die Gefahr, dass sich um ein Bedien- oder Anzeigenfeld herum im Bereich des Übergangs zwischen dem ersten Kunststoffmaterial zum zweiten Kunststoffmaterial ein Lichtrahmen durch durchschimmerndes Licht abzeichnen kann.

Rückseitig am Zierteil kann ein durch mechanische Befestigung (insbesondere durch Schrauben und/oder Klips- oder Rastverbindungen) und/oder stoffschlüssige Befestigung (insbesondere eine Klebeverbindung) angebrachtes elektronisches Funktionselement befestigt sein. Das elektronische Funktionselement kann am Trägerteil und alternativ oder zusätzlich am Funktionsteil befestigt sein.

Alternativ kann das Zierteil ein in das zweite Kunststoffmaterial, das das Funktionsteil bildet, eingebettetes elektronisches Funktionselement umfassen. Das elektronische Funktionselement kann so bereits dann, wenn das Funktionsteil zum Umspritzen mit dem ersten Kunststoffmaterial in die Spritzgussform eingelegt wird, mechanisch und/oder stoffschlüssig an dem Funktionsteil angeordnet oder in das erste Kunststoffmaterial eingebettet sein.

Beispielhafte Ausführungsformen des Kraftfahrzeugzierteils sind in den nachfolgend beschriebenen Zeichnungen dargestellt.

In den Zeichnungen zeigt
- Fig. 1: die rückseitige Ansicht eines ersten Ausführungsbeispiels eines Kraftfahrzeugzierteils mit einem rückseitig aufzusetzenden elektronischen Funktionselement in einer Explosionsansicht,
- Fig. 2: einen Ausschnitt der Rückseite des Kraftfahrzeugzierteils aus Figur 1 mit aufgesetztem elektronischen Funktionselement,
- Fig. 3: einen Ausschnitt einer Ansicht der Rückseite einer zweiten Ausführungsform eines Kraftfahrzeugzierteils,
- Fig. 4: einen Ausschnitt der Rückseite des Kraftfahrzeugzierteils aus Figur 3 mit rückseitig aufgesetztem elektronischen Funktionselement,
- Fig. 5: eine erste Ausgestaltungsmöglichkeit des Ausführungsbeispiels nach Figur 1 und Figur 2 gemäß der in Figur 2 angedeuteten Schnittlinie,
- Fig. 6: eine zweite Ausgestaltungsmöglichkeit des Ausführungsbeispiels nach Figur 1 und Figur 2 gemäß der in Figur 2 angedeuteten Schnittlinie,
- Fig. 7: eine dritte Ausgestaltungsmöglichkeit des Ausführungsbeispiels nach Figur 1 und Figur 2 gemäß der in Figur 2 angedeuteten Schnittlinie, und
- Fig. 8: das Ausführungsbeispiel nach Figur 3 und Figur 4 gemäß der in Figur 4 angedeuteten Schnittlinie.

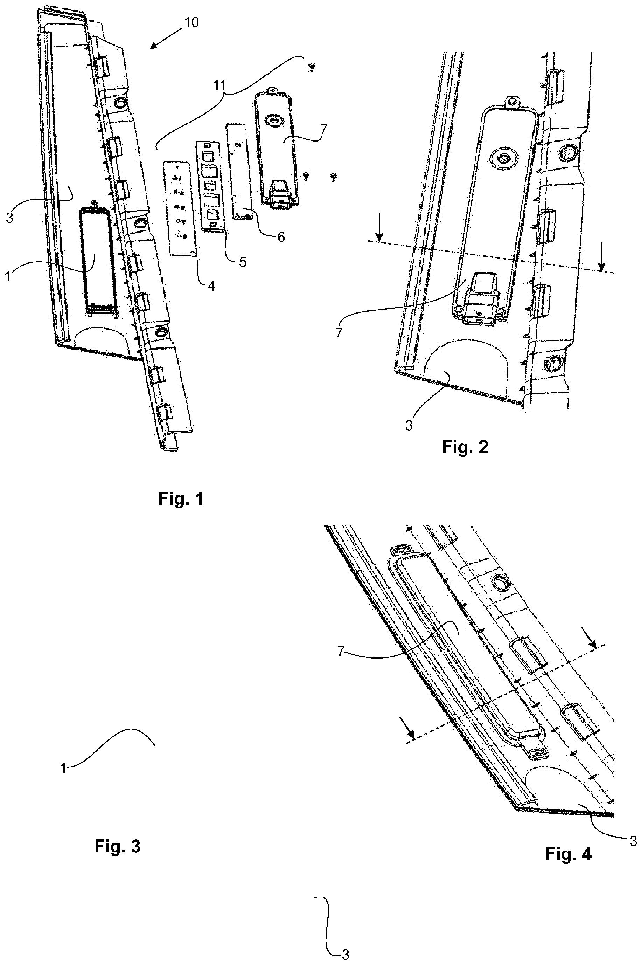

Figur 1 und Figur 2 zeigen die Rückseite eines in den Figuren beispielhaft als Säulenblende ausgeführten Kraftfahrzeugzierteils 10. In Figur 1 und Figur 2 ist zu erkennen, dass rückseitig an dem Kraftfahrzeugzierteil 10 ein mehrteiliges elektronisches Funktionselement 11 über mechanische Befestigungsmittel befestigt ist.

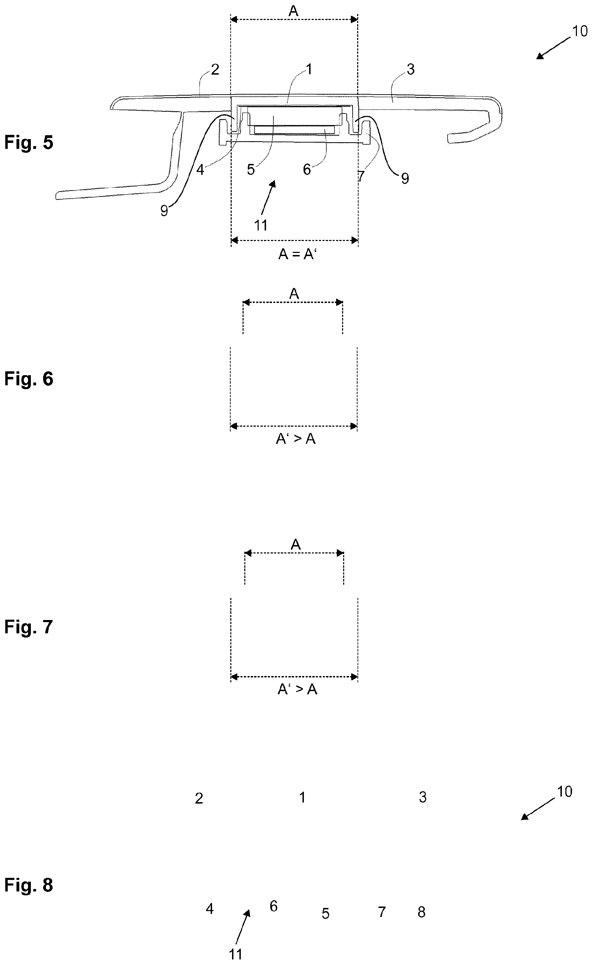

Figur 5, Figur 6 und Figur 7 zeigen sich jeweils geringfügig unterscheidende Schnittansichten, die sich für unterschiedliche denkbare Ausgestaltungen entlang der in Figur 2 gezeigten Schnittlinie ergeben.

Das elektronische Funktionselement 11 umfasst eine zu hinterleuchtende bedruckte Folie 4 mit insgesamt fünf bildgebende Anzeigen- und Bedienfeldern, eine Abstandseinlage 5 - bevorzugt in Form kompressiblen Schaummaterials mit Aussparungen über den Anzeige- und Bedienfeldern - zum Andrücken und Festlegen der Folie 4, ein mit Schaltelementen und/oder Schaltkreisen bedruckte und mit Leuchtelementen und Elektroden von kapazitiven Näherungsschaltern versehende gegebenenfalls folienartige Platine 6 (PCB - Printed Circuit Board), und eine Abdeckung 7, welche das elektronische Funktionselement 11 rückseitig abdeckt und über Schrauben am Zierteil gehalten ist.

Figur 5 zeigt eine Schnittansicht einer ersten möglichen Ausführungsform des in Figur 1 und Figur 2 gezeigten Kraftfahrzeugzierteils. Ein Funktionsteil 1 aus einem transluzenten zweiten Kunststoffmaterial ist von dem ein Trägerteil 3 bildenden ersten Kunststoffmaterial randseitig umlaufend so umgeben, dass das Funktionsteil 1 und das Trägerteil 3 vorderseitig eine durchgängige, spalt- und kantenfreie Fläche mit stufenlos bündig ineinander übergehenden Vorderseiten von Funktionsteil 1 und Trägerteil 3 bilden. Die so gemeinsam gebildete Vorderseite des Zwischenbauteils ist durchgängig mit einem die Dekorfläche bildenden dritten Kunststoffmaterial bedeckt, das bevorzugt im Spritzgusswerkzeug als Deckschicht 2 über die Vorderseiten von Funktions- und Trägerteil geflutet oder in einem separaten Lackier- oder Beschichtungsprozess auf die Vorderseiten aufgebracht wird. Die Rückseite des Funktionsteils 1 bleibt dabei frei zugänglich. Das Funktionsteil 1 ragt aus der Rückseite des Trägerteils 3 mit einer Struktur 9 heraus, die einen Aufsetzrahmen für das Abdeckgehäuse 7 bildet.

Bei der in Figur 5 gezeigten Ausführungsform ist die Durchdringung, mit der das zweite Kunststoffmaterial des Funktionsteils 1 das erste Kunststoffmaterial des Trägerteils 3 durchdringt, rückseitig und vorderseitig gleich breit, die Durchdringungsfläche vorder- und rückseitig gleich groß. Die seitliche Kontaktfläche zwischen Trägerteil 3 und Funktionsteil 1 verläuft - von der Rückseite des Trägerteils zur Vorderseite des Trägerteils gesehen - weitgehend durchgängig senkrecht zur gemeinsam von Trägerteil und Funktionsteil gebildeten und mit dem dritten Kunststoffmaterial bedeckten vorderen Fläche. Die vorderseitige Durchdringungsfläche A, mit der das Funktionsteil 1 das Trägerteil 3 vorderseitig durchdringt, ist demnach weitgehend identisch mit der rückseitigen Durchdringungsfläche A', mit der das Funktionsteil das Trägerteil rückseitig durchdringt.

Abweichend davon ist bei den in Figur 6 und Figur 7 gezeigten Ausführungsformen vorgesehen, dass die vorderseitige Durchdringungsfläche A, mit der das das Funktionsteil 1 bildende zweite Kunststoffmaterial das das Trägerteil 3 bildende erste Kunststoffmaterial vorderseitig durchdringt, geringer ist als die rückseitige Durchdringungsfläche A', mit der das Funktionsteil das Trägerteil rückseitig durchdringt.

In dem in Figur 6 gezeigten Ausführungsbeispiel ist im Bereich des Übergangs von der rückseitigen Durchdringungsfläche zur vorderseitigen Durchdringungsfläche eine Abschrägung vorgesehen. Der Verlauf der seitlichen Kontaktfläche zwischen erstem und zweiten Kunststoffmaterial knickt - von der Rückseite des Trägerteils zur Vorderseite des Trägerteils gesehen und auf die Materialstärke des Trägerteils im Bereich der Durchdringung bezogen - nach bevorzugt etwa halber Gesamtdurchdringungstiefe schräg nach innen ab. In dem in Figur 7 gezeigte Ausführungsbeispiel ist im Bereich des Übergangs von der rückseitigen Durchdringungsfläche A' zur vorderseitigen Durchdringungsfläche A eine Stufe vorgesehen. Der Verlauf der seitlichen Kontaktfläche zwischen erstem und zweiten Kunststoffmaterial knickt - von der Rückseite des Trägerteils zur Vorderseite des Trägerteils gesehen und auf die Materialstärke des Trägerteils im Bereich der Durchdringung bezogen - nach bevorzugt etwa halber Gesamtdurchdringungstiefe zunächst nach innen ab (bevorzugt rechtwinklig) um dann erneut in Richtung der vorderseitigen Durchdringung abzuknicken (wiederum bevorzugt rechtwinklig).

Die in Figur 6 und Figur 7 gezeigten Ausgestaltungen verringern zum einen die Gefahr, dass am Übergang vom zweiten zum ersten Kunststoffmaterial Streulicht äußerlich deutlich sichtbar in Erscheinung tritt. Zum anderen wird die zwischen Funktionsteil und Trägerteil effektive Kontaktfläche auf diese Weise gegenüber der Ausführungsform nach Figur 5 wirksam vergrößert, was die Verbindung zwischen Trägerteil und Funktionsteil verbessert.

Abweichend von den vorstehend beschriebenen Ausführungsformen ist bei der in Figur 3, Figur 4 und Figur 8 gezeigten Ausführungsform vorgesehen, dass das Funktionsteil 1 nicht nur auf der mit dem dritten Kunststoffmaterial zu versehenden Vorderseite, sondern auch rückseitig die Rückseite des Funktionsteils und die Rückseite des Trägerteils weitgehend stufenlos bündig und/oder spaltlos und/oder kantenfrei ineinander übergehen. Das Funktionsteil bildet damit ein in das den Trägerteil 3 bildenden ersten Kunststoff umlaufend in Kontakt stehendes Fenster.

Die umlaufende Kontaktfläche, die sich bei der Herstellung zwischen dem ersten Kunststoffmaterial und dem zweiten Kunststoffmaterial ausbildet, kann auch bei der in Figur 8 gezeigten Ausführungsform analog der in Figur 6 oder Figur 7 gezeigten Ausführung der Kontaktfläche mit einer Stufe oder Abschrägung versehen sein.

Da bei der in Figur 8 gezeigten Ausführungsform keine aus der Rückseite des Trägerteils hervorstehende Struktur vorgesehen ist, stützt sich die Abdeckung 7 bei dieser Ausführungsform bevorzugt umlaufend auf dem Trägerteil 3 ab und nicht, wie in Figur 5, Figur 6 und Figur 7, auf dem Funktionsteil, wobei, wie in Figur 8 gezeigt, eine umlaufende Dichtung und/oder Verklebung 8 zwischen Abdeckung 7 und Trägerteilrückseite vorgesehen ist. Eine Dichtung und/oder Verklebung kann selbstverständlich auch bei den in Figur 5, Figur 6 und Figur 7 gezeigten Ausführungsformen zwischen Funktionsteil und Abdeckung, insbesondere zwischen Struktur 9 und Abdeckung 7, vorgesehen werden.

### Bezugszeichenliste

- 1: Funktionsteil
- 2: Deckschicht
- 3: Trägerteil
- 4: Folie
- 5: Abstandseinlage
- 6: Platine
- 7: Abdeckung
- 8: Dichtung
- 9: rückseitig vorstehende Struktur
- 10: Kraftfahrzeugzierteil
- 11: elektronisches Funktionselement

- A / A': vorderseitige / rückseitige Durchdringungsfläche

## Patentansprüche

1. Kraftfahrzeugzierteil (10) mit einer von einer Deckschicht (2) gebildeten Dekorfläche, umfassend
- ein aus einem ersten Kunststoffmaterial im Spritzgussverfahren erzeugtes Trägerteil (3) mit einer Vorderseite und einer Rückseite,
- ein aus einem zweiten Kunststoffmaterial erzeugtes Funktionsteil (1) mit einer Vorderseite und einer Rückseite,
**dadurch gekennzeichnet, dass**
das Funktionsteil (1) zumindest teilweise vom ersten Kunststoffmaterial umspritzt ist oder das zweite Kunststoffmaterial zumindest auch in eine im ersten Kunststoffmaterial belassene Aussparung eingespritzt ist, und dass die Vorderseiten von Trägerteil (3) und Funktionsteil (1) zur Ausbildung einer durchgängigen Dekorfläche mit einem die Deckschicht (2) bildenden dritten Kunststoffmaterial versehen sind.

2. Zierteil nach Anspruch 1, **dadurch gekennzeichnet, dass** die Rückseite des Funktionsteils (1) zugänglich gehalten ist.

3. Zierteil nach einem der vorhergehenden Ansprüche, **dadurch gekennzeichnet, dass** die Rückseite des Funktionsteils (1) und die Rückseite des Trägerteils (3) stufenlos bündig und/oder spaltlos und/oder kantenfrei ineinander übergehen.

4. Zierteil nach einem der vorhergehenden Ansprüche, **dadurch gekennzeichnet, dass** das Funktionsteil (1) rückseitig eine Struktur ausbildet, die gegenüber der Rückseite des Trägerteils (3) hervorsteht.

5. Zierteil nach einem der vorhergehenden Ansprüche, **dadurch gekennzeichnet, dass** das Funktionsteil (1) und das Trägerteil (3) gemeinsam eine vom dritten Kunststoffmaterial durchgängig bedeckte Vorderseite bilden.

6. Zierteil nach einem der vorhergehenden Ansprüche, **dadurch gekennzeichnet, dass** die Vorderseite des Funktionsteils (1) und die Vorderseite des Trägerteils (3) weitgehend stufenlos bündig und/oder spaltlos und/oder kantenfrei ineinander übergehen.

7. Zierteil nach einem der vorhergehenden Ansprüche, **dadurch gekennzeichnet, dass** das die äußerlich wahrnehmbare Dekorfläche bildende dritte Kunststoffmaterial zumindest in dem Bereich, in dem es die Vorderseite des Funktionsteils (1) bedeckt, eine EMV-transmissive Materialstärke aufweist, insbesondere eine lichtdurchlässige Materialstärke aufweist.

8. Zierteil nach einem der vorhergehenden Ansprüche, **dadurch gekennzeichnet, dass** die vorderseitige Durchdringungsfläche (A), mit der das Funktionsteil (1) das Trägerteil (3) vorderseitig durchdringt, geringer ist als die rückseitige Durchdringungsfläche (A'), mit der das Funktionsteil (1) das Trägerteil (3) rückseitig durchdringt.

9. Zierteil nach dem vorhergehenden Anspruch, **dadurch gekennzeichnet, dass** das Funktionsteil im Bereich des Übergangs von der rückseitigen Durchdringungsfläche (A') zur vorderseitigen Durchdringungsfläche (A) eine Fase, eine Abschrägung oder eine Stufe ausbildet.

10. Zierteil nach einem der vorhergehenden Ansprüche, **dadurch gekennzeichnet, dass** rückseitig am Zierteil (10) ein elektronisches Funktionselement (11) durch mechanische und/oder stoffschlüssige Befestigung angebracht ist.

11. Zierteil nach einem der vorhergehenden Ansprüche, **dadurch gekennzeichnet, dass** das Zierteil (10) ein in das Funktionsteil (1) eingebettetes elektronisches Funktionselement (11) umfasst.

12. Verfahren zur Herstellung eines Kraftfahrzeugzierteils, das eine von einer Deckschicht (2) gebildete Dekorfläche aufweist, mittels eines Spritzgussverfahrens, umfassend die Verfahrensschritte:
- Einspritzen eines ersten Kunststoffmaterials in eine Spritzgussform zur Schaffung eines Trägerteils (3) mit einer Vorderseite und einer Rückseite unter Ausbildung einer im Trägerteil (3) verbleibenden Aussparung,
- Einspritzen eines zweiten Kunststoffmaterials zumindest teilweise in die Aussparung hinein zur Schaffung eines Funktionsteils (1) mit einer Vorderseite und einer Rückseite,
- Aufbringen eines dritten Kunststoffmaterials auf die Vorderseiten des Trägerteils (3) und des Funktionsteils (1) zur Schaffung der die Vorderseiten von Trägerteil (3) und Funktionsteil (1) überdeckenden durchgängigen Deckschicht (2).

13. Verfahren nach Anspruch 12, **dadurch gekennzeichnet, dass** die Aussparung durch einen Schieber gewährleistet ist, der vor dem Einspritzen des zweiten Kunststoffmaterials zur Schaffung einer für das zweite Kunststoffmaterial bestimmten Kavität entfernt wird.

14. Verfahren zur Herstellung eines Kraftfahrzeugzierteils, das eine von einer Deckschicht (2) gebildete Dekorfläche aufweist, mittels eines Spritzgussverfahrens, umfassend die Verfahrensschritte:
- Einlegen oder Einspritzen eines eine Vorderseite und eine Rückseite aufweisenden Funktionsteils (1) aus einem zweiten Kunststoffmaterial in eine Spritzgussform,
- Einspritzen eines ersten Kunststoffmaterials zur Schaffung eines Trägerteils (3) mit einer Vorderseite und einer Rückseite unter zumindest teilweisem Umspritzen des Funktionsteils (1),
- Aufbringen eines dritten Kunststoffmaterials auf die Vorderseiten des Trägerteils (3) und des Funktionsteils (1) zur Erzeugung der die Vorderseiten von Trägerteil (3) und Funktionsteil (1) überdeckenden durchgängigen Deckschicht (2).

15. Verfahren nach Anspruch 14, **dadurch gekennzeichnet, dass** das Funktionsteil (1) zusammen mit einem am Funktionsteil (1) angeordneten oder in das Funktionsteil (1) eingebetteten elektronischen Funktionselement (11) in die Spritzgussform eingesetzt wird.
